# FASCICULE DE BREVET EUROPEEN

(11) **EP 2 456 652 B1**
(45) Date de publication et mention de la délivrance du brevet: **06.01.2016**
(21) Numéro de dépôt: 10752049.6
(22) Date de dépôt: 20.07.2010
(51) Int. Cl.: B62D 5/04, B62D 6/00

(54) **PROCÉDÉ DE DÉTERMINATION D'UNE CONSIGNE DE COUPLE AU VOLANT POUR SYSTÈME DE DIRECTION ASSISTÉE DE VÉHICULE AUTOMOBILE**
VERFAHREN ZUR BESTIMMUNG EINES DREHMOMENT-SOLLWERTS FÜR EIN LENKRAD IN EINEM SERVOLENKSYSTEM EINES MOTORFAHRZEUGS
METHOD FOR DETERMINING A TORQUE SET VALUE FOR A STEERING WHEEL FOR A POWER STEERING SYSTEM OF A MOTOR VEHICLE

(30) Priorité: 22.07.2009 FR 0955103
(43) Date de publication de la demande: 30.05.2012
(73) Titulaire: JTEKT Europe, 69540 Irigny (FR)
(72) Inventeur: MICHELIS, André, F-69540 Grigny (FR); PILAZ, Pierre, F-69170 Saint Marcel L'éclaire (FR); MOULAIRE, Pascal, F-42300 Roanne (FR); GAUDIN, Serge, F-69700 Saint Jean De Touslas (FR)
(74) Mandataire: Chevalier, Renaud Philippe
(86) Numéro de dépôt international: PCT/FR2010/051522
(87) Numéro de publication internationale: WO 2011/010058

(56) Documents cités:
- EP-A- 1 234 746
- US-A1- 2009 138 158

## Description

La présente invention concerne, d'une manière générale, les systèmes de direction assistée des véhicules automobiles, plus particulièrement les systèmes de direction assistée électrique qui sont pilotés par un calculateur électronique embarqué sur le véhicule. Encore plus particulièrement, cette invention s'intéresse à un procédé de détermination d'une consigne de couple au volant ou d'effort au volant, pour un système de direction assistée de véhicule automobile, visant à fournir au conducteur du véhicule un bon agrément de conduite en toutes circonstances.

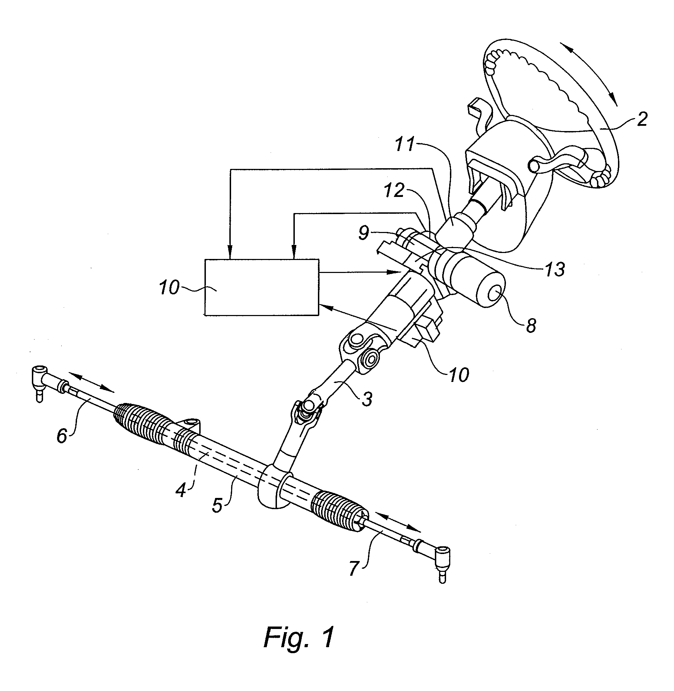

Le contexte de l'invention est rappelé par la figure 1 du dessin schématique annexé, qui montre les principaux éléments mécaniques et autres d'un système de direction assistée, ici électrique, de véhicule automobile.

Un tel système de direction comprend une partie mécanique comportant un volant de conduite 2 lié en rotation à une colonne de direction 3, dont l'extrémité éloignée du volant 2 porte un pignon de direction en prise avec une crémaillère 4, montée coulissante dans un carter de direction 5. Les deux extrémités opposées de la crémaillère 4 sont respectivement liées, par l'intermédiaire de biellettes 6 et 7, aux roues directrices droite et gauche (non représentées) du véhicule. La direction comprend, pour assister l'effort manuel exercé par le conducteur du véhicule sur le volant 2, un moteur électrique d'assistance 8 à deux sens de rotation. L'arbre de sortie du moteur électrique d'assistance 8 est accouplé, par l'intermédiaire d'un réducteur de vitesse 9 à vis sans fin et roue tangente ou à train d'engrenages, à la colonne de direction 3 ou au pignon de direction ou directement à la crémaillère 4, de manière à transmettre un couple moteur (éventuellement aussi un couple résistant) au système de direction. Le moteur électrique d'assistance 8 est piloté par un calculateur électronique embarqué 10, qui reçoit et traite divers signaux, en provenance de capteurs.

Dans une réalisation habituelle, le calculateur électronique 10 reçoit notamment un signal électrique issu d'un capteur de couple 11 placé sur la colonne de direction 3, le capteur 11 mesurant ainsi le couple exercé par le conducteur sur le volant 2, ainsi qu'un signal électrique issu d'un capteur d'angle 12 du volant 2. Ce calculateur électronique 10 peut encore recevoir un signal électrique issu d'un capteur de position angulaire 13 du moteur électrique d'assistance 8, ainsi qu'un signal électrique issu d'un capteur de vitesse (non représenté) du véhicule.

A partir de tels signaux, le calculateur électronique 10 pilote le moteur électrique d'assistance 8, de telle sorte que ce moteur fournit à tout moment un couple ou un effort d'assistance, pour aider les mouvements exercés manuellement par le conducteur sur le volant 2, en amplifiant l'effort appliqué par le conducteur sur le volant ou éventuellement en compensant cet effort, selon des « lois d'assistance » prédéfinies.

Toutefois, suivant les conditions d'utilisation du véhicule, il apparaît qu'une telle assistance n'apporte pas toujours au conducteur l'agrément de conduite et l'effort au volant attendus. A cet égard, il convient de noter que le couple au volant, ou plus exactement l'effort au volant, est le critère prédominant dans l'agrément de conduite d'un véhicule et dans la perception de la « dynamique » du véhicule par le conducteur.

Le document de brevet EP 1234746 A1, qui correspond au préambule de la revendication 1, divulgue déjà un système de direction assistée électrique pour véhicule automobile, dans lequel une valeur de consigne de couple au volant est calculée en fonction de divers paramètres mesurés, comprenant l'accélération transversale ou latérale du véhicule. Ce paramètre est ici déterminé uniquement par un capteur d'accélération transversale.

La présente invention vise à remédier aux inconvénients précédemment exposés, et elle a donc pour principal objectif de fournir un meilleur agrément de conduite en toutes circonstances, autrement dit dans toutes les conditions de roulage du véhicule concerné, en agissant sur le couple ou l'effort au volant en fonction des conditions dynamiques du roulage.

A cet effet, l'invention a pour objet un procédé de détermination d'une consigne de couple ou d'effort au volant, pour un système de direction assistée de véhicule automobile, la direction étant une direction à crémaillère et la consigne de couple ou d'effort étant déterminée en fonction de divers paramètres et/ou informations, ladite consigne de couple ou d'effort au volant étant déterminée en fonction de l'accélération latérale du véhicule, elle-même déterminée principalement à partir d'une estimation de l'effort s'exerçant sur la crémaillère du système de direction.

Ainsi, l'idée à la base de la présente invention consiste à déterminer la consigne de couple ou d'effort au volant à partir de l'accélération latérale, déterminée elle-même à partir de l'estimation de l'effort s'exerçant sur la crémaillère de la direction. Il est rappelé que l'accélération latérale d'un véhicule se définit comme l'accélération centripète de la trajectoire du centre de gravité du véhicule, ramenée dans un repère lié au véhicule.

Avantageusement, le procédé selon l'invention de détermination d'une consigne de couple ou d'effort au volant prend aussi en compte un ou plusieurs des éléments suivants, avec une pondération :
- Accélération latérale obtenue à partir de la position angulaire du volant et de la vitesse longitudinale du véhicule ;
- Accélération latérale mesurée au moyen d'un capteur gyroscopique ;
- Accélération latérale déterminée à partir de la vitesse de lacet et de la vitesse longitudinale du véhicule ;
- Accélération latérale déterminée en fonction des vitesses des roues, plus particulièrement en fonction de l'écart des vitesses des roues d'un même essieu du véhicule.

La prise en compte de l'accélération latérale obtenue à partir de la position angulaire du volant et de la vitesse longitudinale du véhicule permet de compenser l'effet des frottements présents dans l'ensemble du système de direction, depuis la chaussée jusqu'aux mains du conducteur. La prise en compte de l'un au moins des trois autres modes optionnels de détermination de l'accélération latérale permet d'augmenter la robustesse de la consigne d'effort de couple au volant, au regard des modifications apportées au véhicule et/ou des conditions extérieures.

Dans la phase de détermination de l'accélération latérale à partir d'une estimation de l'effort s'exerçant sur la crémaillère, cet effort peut notamment être estimé à partir de données internes du système de direction assistée électrique, telles que : couple d'assistance du moteur électrique ou courant électrique traversant ce moteur, vitesse de rotation de ce moteur, couple exercé par le conducteur, tandis qu'un modèle se présentant comme une table de paramètres est utilisé pour passer de l'effort estimé à l'accélération latérale.

Pour le ou les autres modes de détermination de l'accélération latérale, utilisés avantageusement en combinaison avec le précédent, on utilise des capteurs, des informations et des fonctions déjà présents ou disponibles sur les véhicules modernes, en particulier ceux équipés d'un système de contrôle de trajectoire dit « ESP ». La mise en oeuvre de l'invention ne nécessite donc pas l'ajout de composants supplémentaires.

La pondération, à réaliser entre toutes les déterminations simultanées d'accélération latérale du véhicule, peut être effectuée en attribuant à chacune des valeurs d'accélération latérale un « poids » qui, de préférence, est fonction de la valeur de l'accélération latérale elle-même. On obtient ainsi une accélération latérale théorique, qui est exploitée comme valeur d'entrée d'une table de paramètres principale qui fournit finalement la consigne de couple ou d'effort au volant.

En variante, il est aussi possible de déterminer d'abord une consigne théorique d'effort ou de couple au volant à partir de l'accélération latérale, puis de pondérer cette consigne en fonction des mêmes « poids », plutôt que de pondérer directement l'accélération latérale.

De plus, lorsque la vitesse de rotation du volant augmente de façon sensible, il est avantageux, soit pour augmenter la consistance de l'effort ou du couple au volant lorsque celui-ci est tenu, soit pour amortir le mouvement de rotation alternatif du volant lorsque celui-ci est lâché, de déterminer aussi la consigne de couple ou d'effort au volant en fonction de la vitesse de rotation du volant. Cette vitesse du volant peut être déterminée par le calcul, à partir de la vitesse de rotation instantanée du moteur électrique d'assistance de la direction.

L'invention sera mieux comprise à l'aide de la description qui suit, en référence au dessin schématique annexé illustrant, à titre d'exemple, un mode de mise en oeuvre de ce procédé de détermination d'une consigne de couple au volant :
Figure 1 (déjà mentionnée) est une vue en perspective d'un système de direction assistée électrique auquel s'applique le procédé de l'invention ;
Figure 2 est un schéma-bloc simplifié, résumant ce procédé.

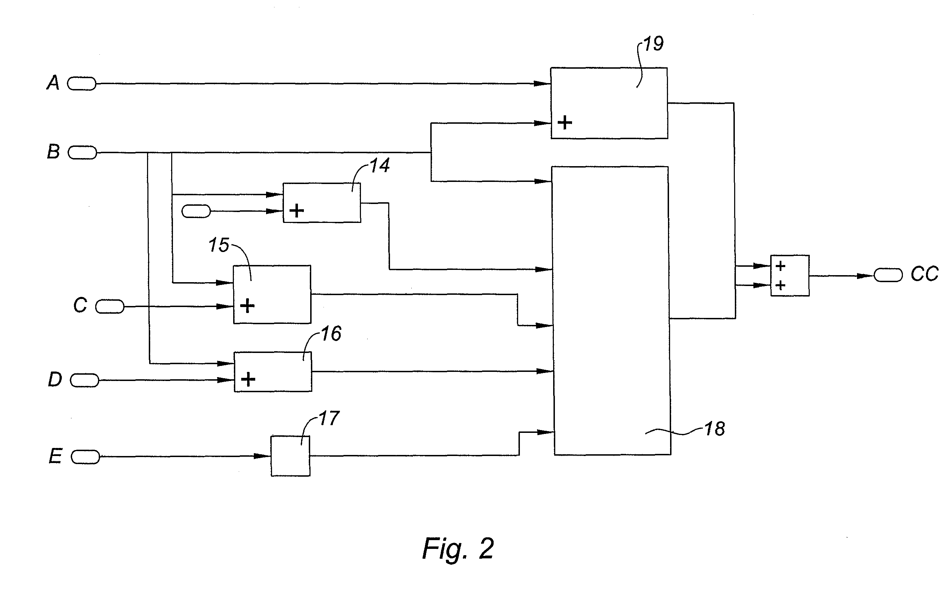

En se référant à la figure 2, et plus particulièrement à la partie gauche de cette figure, sont indiqués symboliquement les divers paramètres pris en compte par le procédé de l'invention, à savoir :
- A : vitesse angulaire du volant de conduite 2 ;
- B : vitesse longitudinale du véhicule ;
- C : vitesse de lacet du véhicule ;
- D : position angulaire du volant de conduite 2 ;
- E : accélération latérale du véhicule.

Un bloc 14 calcule une accélération latérale théorique à partir de l'effort théorique sur la crémaillère 4, calculé par le calculateur électronique 10 de la direction assistée électrique, et de la vitesse longitudinale B du véhicule.

Un autre bloc 15 calcule une accélération latérale théorique à partir de la vitesse longitudinale B du véhicule et de la vitesse de lacet C du véhicule, elle-même mesurée par un gyroscope.

Encore un autre bloc 16 calcule une accélération latérale théorique à partir de la vitesse longitudinale B du véhicule et de la position angulaire D du volant.

E représente une accélération latérale du véhicule mesurée par un gyroscope, qui est traitée par un bloc 17 incorporant un filtre passe-bas.

D'une manière non représentée, un bloc supplémentaire peut encore calculer une accélération latérale théorique à partir de l'écart des vitesses des roues d'un même essieu du véhicule, de la voie de cet essieu, c'est-à-dire l'écartement de ses deux roues, et de la vitesse longitudinale du véhicule.

Dans un bloc 18, réunissant les sorties des divers blocs précédemment mentionnés et recevant aussi la vitesse longitudinale B du véhicule, il est procédé à la détermination de la consigne de couple au volant ; cette détermination combine les diverses valeurs d'accélération latérale notamment fournies par les blocs 14 à 17, avec une pondération appropriée.

Un dernier bloc 19 réalise une fonction d'amortissement, à partir de la vitesse angulaire A du volant et en tenant compte de la vitesse longitudinale B du véhicule.

La combinaison des sorties des blocs 18 et 19 fournit finalement la consigne de couple CC au volant qui est exploitée par le système de direction assistée.

## Revendications

1. Procédé de détermination d'une consigne de couple ou d'effort au volant (2) pour un système de direction assistée de véhicule automobile, la direction étant une direction à crémaillère (4) et la consigne de couple ou d'effort étant déterminée en fonction de divers paramètres et/ou informations, ladite consigne de couple ou d'effort au volant (2) étant déterminée en fonction de l'accélération latérale du véhicule, **caractérisé en ce que** l'accélération latérale du véhicule est elle-même déterminée principalement à partir d'une estimation de l'effort s'exerçant sur la crémaillère (4) du système de direction, cette estimation étant faite à partir de données internes du système de direction assistée électrique, telles que : couple d'assistance du moteur électrique (8) ou courant électrique traversant ce moteur (8), vitesse de rotation de ce moteur (8), couple exercé par le conducteur, tandis qu'un modèle se présentant comme une table de paramètres est utilisé pour passer de l'effort estimé à l'accélération latérale.

2. Procédé selon la revendication 1 **caractérisé en ce que** la détermination de la consigne de couple ou d'effort au volant (2) prend aussi en compte un ou plusieurs des éléments suivants, avec une pondération :
- Accélération latérale obtenue à partir de la position angulaire du volant et de la vitesse longitudinale du véhicule ;
- Accélération latérale mesurée au moyen d'un capteur gyroscopique ;
- Accélération latérale déterminée à partir de la vitesse de lacet et de la vitesse longitudinale du véhicule ;
- Accélération latérale en fonction des vitesses des roues, plus particulièrement en fonction de l'écart des vitesses des roues d'un même essieu du véhicule.

3. Procédé selon la revendication 2, **caractérisé en ce que** la pondération, réalisée entre toutes les déterminations simultanées d'accélération latérale du véhicule, est effectuée en attribuant à chacune des valeurs d'accélération latérale un « poids » qui, de préférence, est fonction de la valeur de l'accélération latérale elle-même, pour obtenir une accélération latérale théorique, qui est exploitée comme valeur d'entrée d'une table de paramètres principale qui fournit finalement la consigne de couple ou d'effort au volant (2).

4. Procédé selon l'une des revendications 1 à 3, **caractérisé en ce que** la consigne de couple ou d'effort au volant est déterminée aussi en fonction de la vitesse de rotation du volant (2), soit pour augmenter la consistance de l'effort ou du couple au volant (2) lorsque celui-ci est tenu, soit pour amortir le mouvement de rotation alternatif du volant (2) lorsque celui-ci est lâché.

## Patentansprüche

1. Verfahren zur Bestimmung eines Drehmoment- oder Kraftsollwerts auf das Lenkrad (2) für ein Servolenkungssystem eines Kraftfahrzeugs, wobei die Lenkung eine Zahnstangenlenkung (4) ist und der Drehmoment- oder Kraftsollwert in Funktion von verschiedenen Parametern und/oder Informationen bestimmt wird, wobei der Drehmoment- oder Kraftsollwert auf das Lenkrad (2) in Funktion von der seitlichen Beschleunigung des Fahrzeugs bestimmt wird, **dadurch gekennzeichnet, dass** die seitliche Beschleunigung des Fahrzeugs selbst hauptsächlich auf der Grundlage einer Schätzung der Kraft bestimmt wird, die auf die Zahnstange (4) des Lenkungssystems ausgeübt wird, wobei diese Schätzung auf der Grundlage von internen Daten des elektrischen Servolenkungssystems erfolgt, wie z.B.: Unterstützungsdrehmoment des elektrischen Motors (8) oder elektrischer Strom, der durch diesen Motor (8) fließt, Drehgeschwindigkeit dieses Motors (8), Drehmoment, das vom Fahrer ausgeübt wird, während ein Modell, das die Form einer Parametertafel aufweist, verwendet wird, um von der geschätzten Kraft auf die seitliche Beschleunigung überzugehen.

2. Verfahren nach Anspruch 1, **dadurch gekennzeichnet, dass** die Bestimmung des Drehmoment- oder Kraftsollwerts auf das Lenkrad (2) auch eines oder mehrere der Elemente mit einer Gewichtung berücksichtigt:
- Seitliche Beschleunigung, die auf de Grundlage der Winkelposition des Lenkrads und der Längsgeschwindigkeit des Fahrzeugs erhalten wird;
- Seitliche Beschleunigung, die mit Hilfe eines Kreiselsensors gemessen wird;
- Seitliche Beschleunigung, die auf der Grundlage der Giergeschwindigkeit und der Längsgeschwindigkeit des Fahrzeugs bestimmt wird;
- Seitliche Beschleunigung in Funktion der Geschwindigkeiten der Räder, insbesondere in Funktion der Abweichung der Geschwindigkeiten der Räder einer gleichen Achse des Fahrzeugs.

3. Verfahren nach Anspruch 2, **dadurch gekennzeichnet, dass** die Gewichtung, durchgeführt zwischen allen gleichzeitigen Bestimmungen der seitlichen Beschleunigung des Fahrzeugs, vorgenommen wird, indem jedem der Werte der seitlichen Beschleunigung ein "Gewicht" zugewiesen wird, das vorzugsweise eine Funktion des Werts der seitlichen Beschleunigung selbst ist, um eine theoretische seitliche Beschleunigung zu erhalten, die als Eingangswert einer Hauptparametertafel genutzt wird, die schließlich den Drehmoment- oder Kraftsollwert auf das Lenkrad (2) liefert.

4. Verfahren nach einem der Ansprüche 1 bis 3, **dadurch gekennzeichnet, dass** der Drehmoment- oder Kraftsollwert auf das Lenkrad auch in Funktion der Drehgeschwindigkeit des Lenkrads (2) bestimmt wird, entweder, um die Konsistenz der Kraft oder des Drehmoments auf das Lenkrad (2) zu erhöhen, wenn dieses gehalten wird, oder um die alternative Drehbewegung des Lenkrads (2) zu dämpfen, wenn dieses losgelassen wird.

## Claims

1. A method for determining a setpoint of a torque or a force on the steering wheel (2) for a power steering system of a motor vehicle, the steering is a rack-and-pinion steering (4) and the torque or force setpoint being determined depending on various parameters and/or information, said setpoint of the torque or force on the steering wheel (2) being determined depending on the lateral acceleration of the vehicle, **characterized in that** the lateral acceleration of the vehicle is itself determined mainly from an estimate of the force exerted on the rack (4) of the steering system, this estimate being carried out from internal data of the electrical power steering system, such as : assistance torque of the electric motor (8) or electrical current flowing through this motor (8), rotation speed of this motor (8), torque exerted by the driver, while a model as a parameter table is used to switch from the estimated force to the lateral acceleration.

2. The method according to claim 1 **characterized in that** determining the setpoint of torque or force on the steering wheel (2) also takes into account one or more of the following elements, with a weighting:
- lateral acceleration obtained from the angular position of the steering wheel and the longitudinal speed of the vehicle;
- lateral acceleration measured by means of a gyro sensor;
- lateral acceleration determined from the yaw speed and the longitudinal speed of the vehicle;
- lateral acceleration depending on the speeds of the wheels, more particularly depending on the difference of speeds of the wheels on the same axle of the vehicle.

3. The method according to claim 2, **characterized in that** the weighting, carried out between all simultaneous determinations of the lateral acceleration of the vehicle, is performed by assigning to each of the lateral acceleration values a «weight» which, preferably, is function of the value of the lateral acceleration itself, to obtain a theoretical lateral acceleration, which is operated as an input value of a main parameter table which finally provides the setpoint of torque or force on the steering wheel (2).

4. The method according to any of claims 1 to 3, **characterized in that** the setpoint of torque or force on the steering wheel is also determined depending on the rotation speed of the steering wheel (2), either to increase the consistency of the force or torque on the steering wheel (2) when the latter is held, or to absorb the alternating rotation movement of the steering wheel (2) when the latter is released.
